# EUROPÄISCHE PATENTANMELDUNG

(11) **EP 1 009 150 A2**
(43) Veröffentlichungstag der Anmeldung: **14.06.2000**
(21) Anmeldenummer: 99440349.1
(22) Anmeldetag: 10.12.1999
(51) Int. Cl.: H04M 3/42

(54) **Telekommunikationsnetz mit Virenschutz in Zeichengabekanälen**

(30) Priorität: 11.12.1998 DE 19857182
(71) Anmelder: ALCATEL, 75008 Paris (FR)
(72) Erfinder: Stahl, Uwe, 71229 Leonberg (DE); Lautenschlager, Wolfgang, 71287 Weissach-Flacht (DE); Krank, Lothar, 71254 Ditzingen (DE); Weik, Hartmut, 70195 Stuttgart (DE)
(74) Vertreter: Zinsinger, Norbert

(57) **Zusammenfassung**

Ein Telekommunikationsnetz mit einer Vermittlungsstelle (1), bei der in einem Speicher (12) Dienstleistungen speicherbar sind, die von einem Teilnehmer erstellbar und aktivierbar sind, ist dadurch gekennzeichnet, daß zumindest für die Datenrichtung von einem Teilnehmer zur Vermittlungsstelle (1) hin mindestens ein Kanal, vorzugsweise der Zeichengabekanal, auf Viren und/oder andere unerlaubte Signale überwacht wird. Dadurch können die genannten Viren oder unerlaubten Signale nicht unerkannt zu weiteren Einrichtungen der Vermittlungsstelle weitergeleitet werden, weil durch ihre Erkennung diese Möglichkeit in der Vermittlungsstelle blockiert wird.

## Beschreibung

Die Erfindung betrifft ein Telekommunikationsnetz mit einer Vermittlungsstelle, bei der in einem Speicher Dienstleistungen speicherbar sind, die vom Teilnehmer erstellbar und aktivierbar sind.

Bei einer derartigen Dienstleistung mag es sich um eine Rufumleitung handeln, die vom Betreiber des Telekommunikationsnetzes angeboten wird und die es den Teilnehmern ermöglicht, Rufnummern und Befehle einzugeben, die die Rufumleitung für eine bestimmte Betriebsart aktivieren. Es mag auch die Möglichkeit bestehen, daß ein Teilnehmer selbst Programme oder Anwendungen programmiert und zu dem genannten Speicher der Vermittlungsstelle sendet.

Diese Möglichkeit, daß ein Teilnehmer eigene Dienstleistungen/Programme im Speicher der Vermittlungsstelle speichert, oder aber, falls eine solche Speicherung nicht vorgesehen ist, durch Senden von Befehlen oder Daten (z.B. Variable) an die Vermittlungsstelle ein gespeichertes Programm aktiviert, bringt die Gefahr mit sich, daß vom Benutzer zur Vermittlungsstelle gesendete Programme oder Signalfolgen, die von der Vermittlungsstelle zunächst als Befehl zum Aktivieren irgendeines verfügbar gehaltenen Programms interpretiert werden, Viren oder sonstige (aus technischen oder ökonomischen Gründen) "schädliche" Befehle oder Zeichenfolgen enthalten, wobei es sich im letztgenannten Fall z.B. um die Abschaltung einer Gebührenzählung handeln könnte.

Um derartigen Eingriffen vorzubeugen, ist das Telekommunikationsnetz gemäß der Erfindung dadurch gekennzeichnet, daß zumindest für die Datenrichtung von einem Teilnehmer zur Vermittlungsstelle hin mindestens ein Kanal, vorzugsweise der Zeichengabekanal, auf Viren und/oder andere unerlaubte Signale überwacht wird.

Der Vorteil der Erfindung besteht darin, daß die genannten Viren oder unerlaubten Signale nicht unerkannt zu weiteren Einrichtungen der Vermittlungsstelle weitergeleitet werden können, weil durch ihre Erkennung diese Möglichkeit in der Vermittlungsstelle blockiert wird.

Der Zeichengabekanal oder Signalisierungskanal (D-Kanal bei ISDN-Netzen) eignet sich besonders für die Übermittlung der zu überwachenden Signale.

Die Überwachung kann in unterschiedlicher Weise erfolgen. So kann die Überwachung auf Viren die Überwachung auf bekannte Computer-Viren und bekannte Makro-Viren umfassen.

Die Überwachung auf Viren kann gemäß einer Ausführungsform der Erfindung die Prüfung der vom Teilnehmer her auf dem Zeichengabekanal zur Vermittlungsstelle gelangenden Zeichen auf unbekannte Zeichenfolgen hin umfassen, wobei diese unbekannten Zeichenfolgen bei ihrem Auftreten protokolliert werden. Auch hier kann es zweckmäßig sein, diese Zeichenfolgen noch nicht weiterzuleiten. Vielmehr kann bei Ausführungsformen der Erfindung veranlaßt werden, daß die unbekannten Zeichenfolgen einem menschlichen Programmierer oder einer sonstigen für die Prüfung geeigneten Person zugeleitet werden, beispielsweise als Ausdruck an einem Drucker am Arbeitsplatz der betreffenden Person ausgeworfen werden, auf einem Bildschirm am genannten Arbeitsplatz erscheinen oder in anderer geeigneter Weise. Bei einer anderen Ausführungsform der Erfindung veranlaßt dagegen die Vermittlungsstelle in einem geschützten Bereich des Computers der Vermittlungsstelle das probeweise Abarbeiten der unbekannten Zeichenfolge, um dadurch zu versuchen, die Folgen, die diese Zeichenfolge nach sich zieht, abzuschätzen.

Sollte die Beurteilung ergeben, daß die unbekannte Zeichenfolge keine Gefahr oder Beeinträchtigung für den ordnungsgemäßen Betrieb des Telekommunikationsnetzes bildet, so ist gemäß einer Ausführungsform der Erfindung vorgesehen, daß diese zunächst unbekannte Zeichenfolge im späteren Verlauf als bekannte Zeichenfolge interpretiert wird und daß sie ohne eingehende Überprüfung auf ihre Funktion hin weitergeschaltet wird.

Wenn irgendeine Vermittlungsstelle eines von einem Netzbetreiber betriebenen Netzes in der geschilderten Weise durch Viren oder störende Zeichenfolgen in unerwünschter Weise beeinflußbar ist, so ist es zweckmäßig, wenn der Betreiber des Telekommunikationsnetzes sein gesamtes Telekommunikationsnetz nach außen hin in der erfindungsgemäßen Weise abschirmt, selbst dann, wenn die erste Vermittlungsstelle des genannten Telekommunikationsnetzes, zu der Signale von außen her gelangen, in keiner Weise durch irgendwelche Signale in ihrer Funktion verändert werden kann. Es besteht nämlich die Möglichkeit, daß beispielsweise Viren auf dem weiteren Weg in dem Telekommunikationsnetz zu einer solchen Vermittlungsstelle gelangen, die durch diese Viren in ihrer Funktion beeinträchtigt werden kann.

Alternativ dazu mag es ausreichen, lediglich diejenige Vermittlungsstelle bzw. diejenigen Vermittlungsstellen in der geschilderten Weise gegen das unkontrollierte Eindringen von Viren oder sonstigen schädlichen Signalen sowohl von der Teilnehmerseite her als auch vom übrigen Telekommunikationsnetz her zu schützen, die durch derartige Viren/Signale unmittelbar beeinflußt werden können.

Die oben beschriebene Überprüfung von unbekannten Zeichenfolgen kann durchaus dazu führen, daß ein Teilnehmer, der ein von ihm entwickeltes neues Programm bzw. eine von ihm entwickelte neue Dienstleistung in dem Speicher seiner Vermittlungsstelle speichern will, die für eine derartige Speicherung ausgebildet ist, nicht unmittelbar nach dem Absenden dieses Programms zur Vermittlungsstelle von diesem Programm Gebrauch machen kann, sondern daß je nach Dauer der Überprüfung bis zur Beurteilung, daß dieses genannte Programm unschädlich ist, ein gewisser Zeitraum verstreichen kann.

Zur Erfindung gehört auch eine Vermittlungsstelle mit den erfindungsgemäßen Merkmalen.

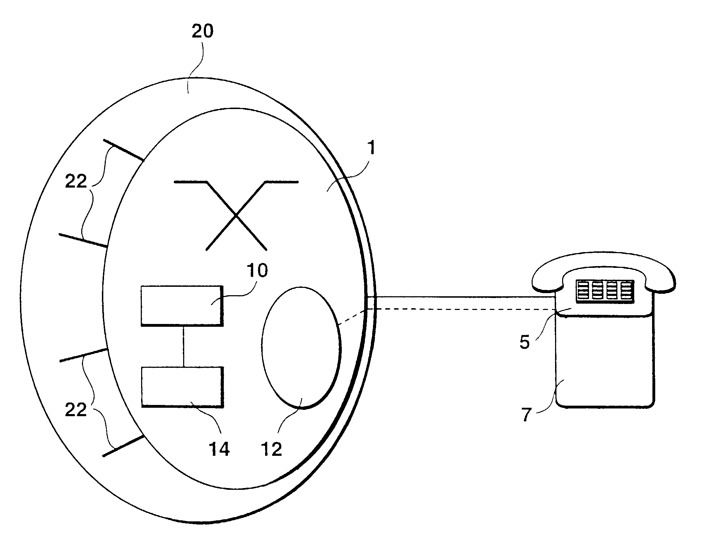

Weitere Merkmale und Vorteile der Erfindung ergeben sich aus der nachfolgenden Beschreibung eines Ausführungsbeispiels der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein.

Die einzige Figur zeigt ein Telekommunikationsnetz und eine von mehreren Vermittlungsstellen in diesem, sowie eine Telekommunikationsanlage eines Teilnehmers, die mit der Vermittlungsstelle Verbindung aufnehmen kann.

Eine Vermittlungsstelle 1 ist mit einer Telekommunikationseinrichtung 5 mit angeschlossenem Computer 7 eines Teilnehmers verbindbar. Dieser Computer ermöglicht das Programmieren eigener Programme, die der Teilnehmer zu einem Speicher der Vermittlungsstelle senden kann.

Im Beispiel hat der Teilnehmer an der Telekommunikationseinrichtung 5 gerade eine Zeichenfolge auf dem Zeichengabekanal zur Vermittlungsstelle 1 gesendet, um ein in deren Speicher 10 gespeichertes Programm zu aktivieren. Eine Steuereinrichtung 12 in der Vermittlungsstelle 1 prüft die Zeichenfolge daraufhin, ob es sich um eine bekannte Zeichenfolge handelt, die sofort zur weiteren Verarbeitung weitergegeben werden kann. Wenn die Steuereinrichtung 12 feststellt, daß es sich nicht um eine bekannte Zeichenfolge handelt, so veranlaßt die Steuereinrichtung 12, daß diese Zeichenfolge in einem weiteren Speicher 14 gespeichert wird. Anschließend veranlaßt die Steuereinrichtung 12 im beschriebenen Ausführungsbeispiel, daß an einem in den Räumlichkeiten der Vermittlungsstelle 1 vorhandenen Arbeitsplatz eines Programmierers oder Operators ein Signal erscheint, das diesen darauf hinweist, daß eine Zeichenfolge unbekannter Art zu überprüfen ist. Wenn der Programmierer diese Zeichenfolge als "ungefährlich" einstuft, veranlaßt er die Steuereinrichtung 12, diese Zeichenfolge als bekannte Zeichenfolge zu registrieren und weiterzuschalten. Die gleiche Zeichenfolge wird zukünftig als bekannte Zeichenfolge von der Steuereinrichtung interpretiert werden.

Bei einem anderen Ausführungsbeispiel wird anstatt der Signalisierung an einen Programmierer oder Operator eine Weiterbehandlung in einem Rechner vorgenommen.

Insbesondere ist bei einem Ausführungsbeispiel der Erfindung vorgesehen, daß die Steuereinrichtung eine Abarbeitung der Zeichenfolge in einem geschützten Bereich eines Computers vornimmt, um automatisch beurteilen zu können, ob in der Zeichenfolge Viren oder schädliche Befehle enthalten sind. Wird bei diesem Vorgehen die Zeichenfolge als mit Sicherheit ungefährlich eingestuft, so wird sie ebenfalls, wie oben bereits erwähnt, als bekannte Zeichenfolge gekennzeichnet und als solche weitergegeben, damit sie die durch die Zeichenfolge vorgesehenen Abläufe in der Vermittlungsstelle veranlaßt.

In der Figur ist noch angedeutet, daß die Vermittlungsstelle innerhalb eines Telekommunikationsnetzes 20 mit weiteren (nicht gezeigten) Vermittlungsstellen über Kanäle 22 in Verbindung steht. Bei Ausführungsformen der Erfindung ist vorgesehen, daß die dargestellte Vermittlungsstelle auch gegenüber den genannten Kanälen bezüglich des Eindringens von Viren oder anderen schädlichen Signalfolgen in der oben geschilderten Weise geschützt ist, wobei lediglich eine Abwandlung insofern vorgenommen werden muß, als die Kommunikation zwischen Vermittlungsstelle und einem ISDN-Telekommünikationsnetz nach dem Protokoll Nr. 7 erfolgt, wogegen die Datenübertragung zwischen dem Teilnehmer und der Vermittlungsstelle auf B-Kanälen (Telefongespräche, Telefaxsendungen, Datensendungen) und dem D-Kanal (Signalisierungskanal) erfolgt. In der Zeichnung sind die B-Kanäle durch durchgezogene Linien, die D-Kanäle durch unterbrochene Linien dargestellt.

Im Beispiel wird davon ausgegangen, daß die Signale oder möglicherweise auch Programme, die der Teilnehmer zur Vermittlungsstelle sendet, auf dem D-Kanal übermittelt werden. Die Erfindung schließt aber nicht aus, daß eine derartige Übermittlung auch auf dem B-Kanal oder bei anderen, vom ISDN-System abweichenden Systemen, auf anderen Nachrichtenkanälen erfolgt.

## Patentansprüche

1. Telekommunikationsnetz (20) mit einer Vermittlungsstelle (1), bei der in einem Speicher (12) Dienstleistungen speicherbar sind, die von einem Teilnehmer erstellbar und aktivierbar sind,
dadurch gekennzeichnet, daß zumindest für die Datenrichtung von einem Teilnehmer zur Vermittlungsstelle (1) hin mindestens ein Kanal, vorzugsweise der Zeichengabekanal, auf Viren und/oder andere unerlaubte Signale überwacht wird.

2. Netz nach Anspruch 1, dadurch gekennzeichnet, daß die Überwachung auf Viren die Überwachung auf bekannte Computer-Viren und bekannte Makro-Viren umfaßt.

3. Netz nach Anspruch 1 oder 2, dadurch gekennzeichnet, daß die Überwachung auf'Viren oder andere unerlaubte Signale die Überwachung auf unbekannte Zeichenfolgen umfaßt.

4. Netz nach Anspruch 3, dadurch gekennzeichnet, daß unbekannte Zeichenfolgen bei ihrem Auftreten protokolliert werden.

5. Netz nach einem der vorhergehenden Ansprüche, dadurch gekennzeichnet, daß eine unbekannte Zeichenfolge einer Überwachungsperson zur Prüfung zugeleitet wird.

6. Netz nach einem der vorhergehenden Ansprüche, dadurch gekennzeichnet, daß eine Steuereinrichtung (12) der Vermittlungsstelle (1) eine unbekannte Zeichenfolge in einem geschützten Bereich eines Computers der Vermittlungsstelle abarbeiten läßt, um dadurch die Folgen, die diese Zeichenfolge nach sich zieht, abzuschätzen.

7. Netz nach einem der vorhergehenden Ansprüche, dadurch gekennzeichnet, daß zunächst als unbekannt klassifizierte Zeichenfolgen nach einer anschließenden Beurteilung als nicht gefährlich zukünftig als bekannte Zeichenfolgen interpretiert werden.

8. Vermittlungsstelle, gekennzeichnet durch die die Vermittlungsstelle betreffenden Merkmale eines der vorhergehenden Ansprüche.
